(19) Europäisches Patentamt
European Patent Office
Office européen des brevets

(11) Veröffentlichungsnummer: **0 003 784**
**B1**

(12) # EUROPÄISCHE PATENTSCHRIFT

(45) Veröffentlichungstag der Patentschrift: **28.01.81**

(51) Int. Cl.³: **C 07 F 9/40**, C 07 F 9/32, C 07 F 9/50, D 06 L 3/12, H 01 S 3/20

(21) Anmeldenummer: **79100387.4**

(22) Anmeldetag: **12.02.79**

(54) **Distyryl-Verbindungen, sowie deren Herstellung und Verwendung als Weisstöner und Laserfarbstoff.**

(30) Priorität: **22.02.78 DE 2807497**

(43) Veröffentlichungstag der Anmeldung: **05.09.79 Patentblatt 79/18**

(45) Bekanntmachung des Hinweises auf die Patenterteilung: **28.01.81 Patentblatt 81/4**

(84) Benannte Vertragsstaaten: **CH DE FR GB IT**

(56) Entgegenhaltungen:
**CH-B-580 702**
**DE-A-2 262 531**
**DE-A-2 700 292**
**DE-B-1 158 066**

(73) Patentinhaber: **BAYER AG, Zentralbereich Patente, Marken und Lizenzen, D-5090 Leverkusen 1, Bayerwerk (DE)**

(72) Erfinder: **Eckstein, Udo, Dr., Morgengraben 2, D-5000 Köln 80 (DE)**
Erfinder: **Siegel, Edgar, Dr., Am Kiesberg 4, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

EP 0 003 784 B1

ACTORUM AG.

# Distyryl-Verbindungen, sowie deren Herstellung und Verwendung als Weisstöner und Laserfarbstoff

Die Erfindung betrifft phosphono-, phosphonyl- und phosphinyl-substituierte Distyryl-Verbindungen, Verfahren zu deren Herstellung sowie deren Verwendung als Weisstöner und als Laserfarbstoffe.

Die neuen Verbindungen entsprechen der allgemeinen Formel

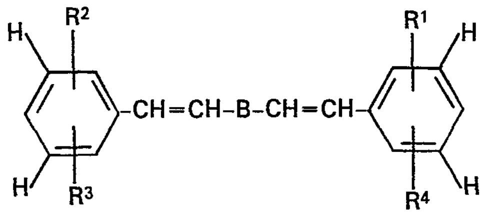

(I)

worin

B 1,4-Phenylen, 4,4′-Biphenylylen, 1,4- und 2,6-Naphthylen, 9,10-Dihydro-2,7-phenanthrenylen oder 2,7-Dibenzofuranylen,

$R^1$ einen Rest der Formel

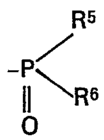

$R^2$ Wasserstoff, Chlor, $C_1$–$C_4$-Alkyl, Sulfo, Carboxy, $C_1$–$C_4$-Alkoxy, $C_1$–$C_4$-Alkoxycarbonyl, Cyano oder einen Rest der Formel

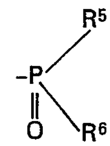

$R^3$ und $R^4$ Wasserstoff, Chlor, $C_1$–$C_4$-Alkyl, gegebenenfalls durch Methyl, Methoxy oder Chlor substituiertes Phenyl, $C_1$–$C_4$-Alkoxy, $C_1$–$C_4$-Alkoxycarbonyl, Cyano, $C_1$–$C_4$-Alkylsulfonyl, $C_1$–$C_4$-Alkylcarbonyl, Hydroxy oder Carboxy,

$R^5$ und $R^6$ $C_1$–$C_4$-Alkyl, Benzyl, gegebenenfalls durch Methyl, Methoxy oder Chlor substituiertes Phenyl, eine Gruppe der Formel $-OR^7$, oder einen Rest der Formel

$-(OCH_2CH_2)_n-OR^7$,

$R^7$ Wasserstoff, $C_1$–$C_4$-Alkyl, Benzyl oder Phenyl und

n eine ganze Zahl von 1 bis 7 bedeuten,

wobei die Phosphonsäuregruppe auch als Salz vorliegen kann.

Besonders wertvolle Verbindungen entsprechen der Formel

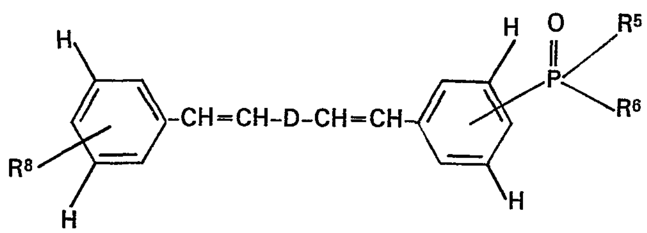

(II)

worin

D 1,4-Phenylen, 4,4′-Biphenylylen oder 9,10-Dihydro-2,7-phenanthrenylen,

$R^8$ Wasserstoff, Chlor, $C_1$–$C_4$-Alkyl, Phenyl, $C_1$–$C_4$-Alkoxy, $C_1$–$C_4$-Alkoxycarbonyl, Cyano, $C_1$–$C_4$-Alkylcarbonyl, Hydroxy oder Carboxy oder einen Rest der Formel

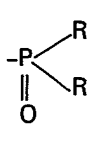

bedeuten.

Die Distyryl-Verbindungen der Formel (I) können nach an sich bekannten Methoden dadurch hergestellt werden, dass man die Verbindung der Formel

$Z^1-B-Z^2$ (III)

im molaren Verhältnis 1:1:1 mit je einer Verbindung der Formeln

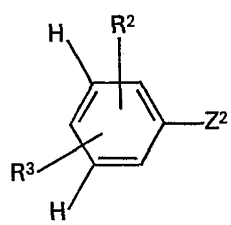

(IVa) bzw.

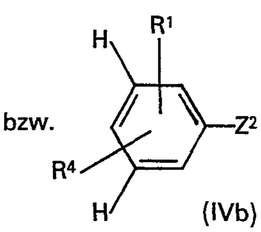

(IVb)

umsetzt, wobei je eines der Symbole $Z_1$ bzw. $Z_2$ eine Formylgruppe und das andere eine Gruppierung der Formel

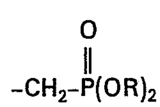

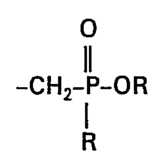

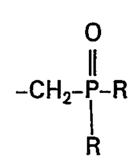

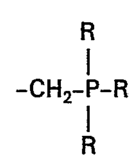

darstellt, worin
R einen $C_1$-$C_4$-Alkyl, einen $C_5$-$C_6$-Cycloalkyl oder einen gegebenenfalls weitersubstituierten Arylrest, vorzugsweise einen Phenylrest, bedeutet.

Auf diese Weise können symmetrische und unsymmetrische Verbindungen und Gemische aus symmetrischen und unsymmetrischen Verbindungen hergestellt werden.

Demgemäss kann man beispielsweise Dialdehyde der Formel

$$O=CH-B-CH=O \qquad (V)$$

mit monofunktionellen Verbindungen der Formeln

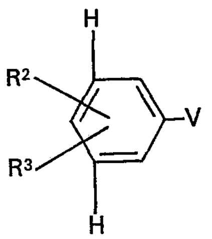
bzw.

(VIa)

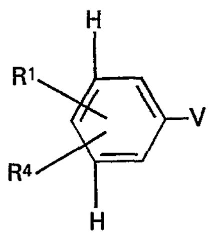

(VIb)

oder Monoaldehyde der Formeln

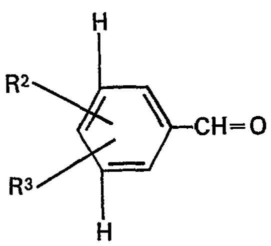
bzw.

(VIIa)

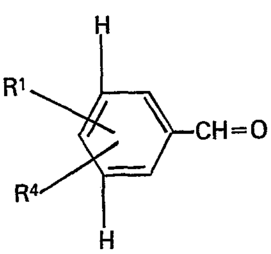

(VIIb)

mit bifunktionellen Verbindungen der Formel

$$V-B-V \qquad (XIII)$$

umsetzen, wobei A, $R^1$, $R^2$, $R^3$ und $R^4$ die angegebene Bedeutung haben und V

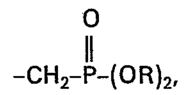,
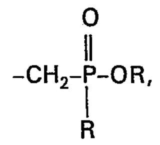,
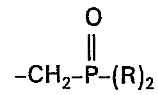

oder $-CH_2-P(R)_3$

bedeutet.

Die hierbei als Ausgangsstoffe benötigten Phosphorverbindungen der Formeln (VIa), (VIb) und (VIII) werden erhalten, indem man Halogenmethylverbindungen, vorzugsweise Chlormethyl- oder Brommethylverbindungen der Formeln

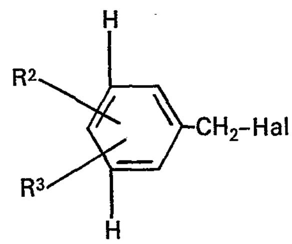
(Xa) bzw.

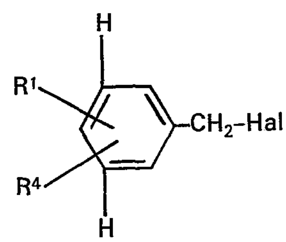
(Xb)

und

$$Hal-CH_2-B-CH_2-Hal \qquad (X)$$

mit Phosphorverbindungen $P(OR)_3$, $R-P(OR)_2$, $RO-P(R)_2$ oder $P(R)_3$ umsetzt, wobei R die angegebene Bedeutung hat. Vorzugsweise bedeutet R an Sauerstoff gebunden $C_1$-$C_4$-Alkyl, an Phosphor gebunden dagegen Phenyl.

Zur Herstellung der Endstoffe kondensiert man die entsprechenden Komponenten in Gegenwart basischer Kondensationsmittel in organischen Lösungsmitteln.

Als Lösungsmittel wählt man vorteilhaft indifferente Lösungsmittel. Bevorzugt sind Dimethylformamid, Dimethylacetamid und Phosphorsäure-tris-dialkylamide, wobei Alkyl insbesondere $C_1$-$C_4$-Alkyl ist.

Als Kondensationsmittel kommen stark basische Verbindungen in Betracht wie Alkali- oder Erdalkalimetallhydroxide, Alkali- oder Erdalkaliamide und Alkali- oder Erdalkalimetallalkoholate.

Man arbeitet bevorzugt im Temperaturbereich von 0 bis 120 °C.

Ein weiteres Verfahren zur Herstellung von Verbindungen der Formel (I) besteht darin, dass man die Bis-halogenverbindungen der Formel (XI)

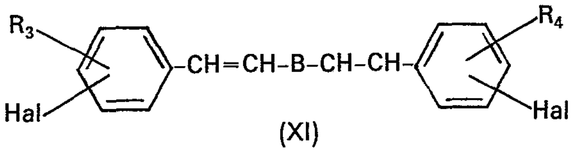

(XI)

mit Phosphorverbindungen der Formel

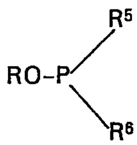

(XII)

umsetzt, wobei Hal bevorzugt Chlor oder Brom bedeutet.

Geeignete Kondensationskatalysatoren sind Schwermetallsalze, CuCl, CuJ, $CoCl_2$ und $NiCl_2$ verwendet.

Die Reaktionstemperaturen liegen vorzugsweise zwischen 160 und 200 °C.

Die Verbindungen der Formel (XI) sind nach bekannten Verfahren zugänglich.

Die erfindungsgemässen Verbindungen (I) werden ebenfalls erhalten, wenn man die entsprechenden Aldehydanile in einem dipolar aprotischen Lösungsmittel wie Dimethylformamid in Gegenwart von basischen Kondensationsmitteln mit den entsprechenden Methylverbindungen umsetzt. An den Reaktionsprodukten der vorstehenden Verfahren können noch weitere, an sich bekannte Umwandlungen vorgenommen werden wie Halogenierungen, funktionelle Abwandlungen von Carboxylgruppen, Einführung von Chlormethylgruppen oder Austausch von Halogenatomen gegen Cyanogruppen.

Die Verbindungen der Formel (I) zeigen im gelösten oder fein verteilten Zustand eine sehr starke blaue Fluoreszenz. Sie eignen sich einzeln oder als Mischungen zum Weisstönen der verschiedensten synthetischen, halbsynthetischen oder natürlichen organischen Materialien. Besonders geeignet sind die neuen Phosphorsäureester-Gruppen enthaltenden Verbindungen der Formel I zum Weisstönen von Fasermaterialien auf der Basis von Polyestern und anderen synthetischen organischen hochmolekularen Verbindungen. Andererseits eignen sich die Verbindungen der Formel (I), die Phosphonsäuregruppen enthalten, für das Weisstönen von Baumwolle, Cellulose und Polyamiden aus Waschflotten. Verbindungen der Formel (I) sind mit ihrer grossen Quantenausbeute und hohen Lichtechtheit weiterhin verwendbar als durchstimmbare Farbstofflaser im blauen Spektralbereich von 400 nm–480 nm.

Die neuen weisstönenden Substanzen zeichnen sich durch besonders gute Hitzebeständigkeit, Lichtechtheit, Migrierbeständigkeit und Aufhellwirkung aus. Diese Effekte weisen konstitutionell nächstvergleichbare bekannte Weisstöner nicht im gleichen Masse auf.

Beispielsweise zeigen die erfindungsgemässen Phosphorsäureester-Typen gegenüber den ähnlichen phosphorfreien Distyrylbenzolderivaten gemäss DE-AS 1 108 219 den überraschenden Vorteil, auf thermosolgefärbten Polyesterfasern sowie auf synthetischen Polyamidfasern einen verbesserten Weisseffekt zu erzeugen.

Auch die neuen wasserlöslichen Typen mit freier Phosphatgruppe übertreffen unerwarteterweise die aus der japanischen Patentpublikation 77/13522 bekannten Weisstöner, welche Sulfonsäuregruppen als wasserlöslich-machende Reste tragen, hinsichtlich des Weisseffekts auf synthetischen Polyamidgeweben.

Beispiel 1

Zu einer Lösung von 36,4 g (0,1 Mol) 4-Diäthoxyphosphonomethylbenzolphosphonsäure-diäthylester und 10,5 g (0,05 Mol) 4,4′-Diformylbiphenyl in 50 ml Hexamethylphosphorsäuretriamid tropft man innerhalb von 30 Minuten 100 ml einer 1 molaren Natriumäthylat-Lösung in Äthanol so zu, dass die Temperatur nicht über 50 °C steigt. Man lässt 4 Stunden bei 40 bis 50 °C rühren, stellt mit Essigsäure auf pH 4 bis 5, destilliert den grössten Teil der Lösungsmittel im Vakuum ab und gibt den Rückstand auf 200 ml Eiswasser. Der gelbliche Niederschlag wird abgesaugt, mit Wasser gewaschen und getrocknet. Man erhält so 22,9 g (72,7% der Theorie) an Rohprodukt der Formel

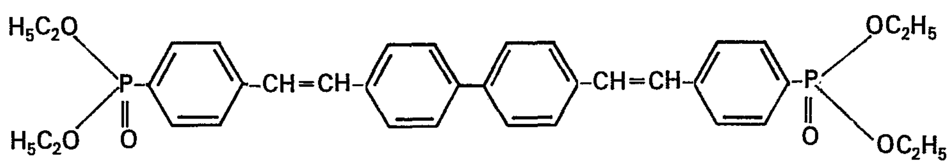

(1)

das durch mehrmaliges Umkristallisieren aus Xylol gereinigt wird. Die Substanz fluoresziert in Dimethylformamid gelöst stark blau und bewirkt, eingearbeitet in Polyäthylen-terephthalat, einen starken Weisseffekt mit guten Echtheiten.

Die verwendete Diäthoxyphosphonomethyl-Verbindung der Formel

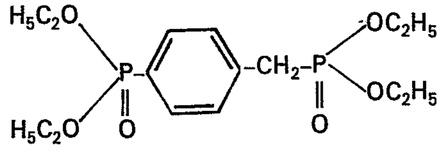

(2)

wird auf folgende Weise hergestellt:
Zu einer Lösung von 228 g (1 Mol) 4-Methylbenzolphosphonsäurediäthylester in 1000 ml wasserfreiem Tetrachlorkohlenstoff gibt man bei 60°C portionsweise eine Mischung aus 196 g (1,1 Mol) N-Bromsuccinimid, 1,33 g Dibenzoylperoxid und 1,33 g Azo-bis-isobutyronitril und rührt bei Rückflusstemperatur noch 4 Stunden. Danach wird Succinimid abfiltriert, der Filterkuchen mit 100 Tetrachlorkohlenstoff gewaschen und das Filtrat im Vakuum eingedampft. Das ölige Rohprodukt ist genügend rein und wird ohne Destillation weiterverarbeitet (Ausbeute 90% der Theorie).

61,4 g (0,2 Mol) roher 4-Brommethylbenzolphosphonsäurediäthylester wird bei 150°C zu 49,8 g (0,3 Mol) Triäthylphosphit getropft. Danach wird die Temperatur innerhalb von 3 Stunden langsam auf 180°C gesteigert und im Hochvakuum destilliert. Man erhält 60 g (82% der Theorie) vom $Kp_{0,5}$ 135 bis 150°C.

Ebenso erhält man auch die entsprechenden meta- und ortho-Phosphonoderivate der Formel (2).

Beispiel 2

Analog Beispiel 1 ergibt die Umsetzung von 4-Diäthoxyphosphonomethylbenzolphosphonsäurediäthylester mit Terephthalaldehyd 18,3 g (66% der Theorie) der Verbindung der Formel

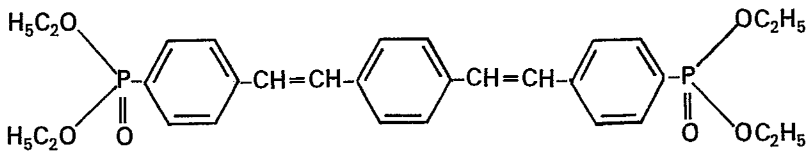

(3)

als gelbe Kristalle. Sie lassen sich durch Umlösen aus Toluol/Ligroin unter Zusatz von Bleicherde reinigen; Fluoreszenz in Dimethylformamid: rotstichig blau.

Beispiel 3

In gleicher Weise wie in Beispiel 1 erhält man aus 39,6 g (0,1 Mol) (4-Diäthoxyphosphonomethylbenzol)-phenylphosphinsäureäthylester und 6,7 g (0,05 Mol) Terephthalaldehyd die Verbindung der Formel

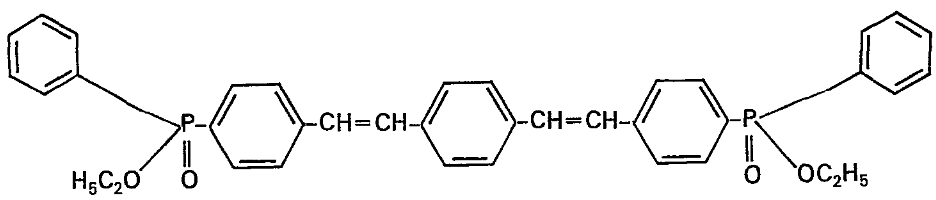

(4)

in Form blassgelber Kristalle (Toluol), deren Lösung in Dimethylformamid intensive, rotstichig blaue Fluoreszenz zeigt.

Beispiel 4

Zu einer Suspension von 0,6 g Nickel(II)-chlorid und 33,2 g (0,2 Mol) Triäthylphosphit gibt man bei 160°C 51,6 g (0,1 Mol) 4,4′-Di-(2-bromstyryl)-biphenyl so zu, dass das Äthylbromid gleichmässig abdestilliert und aufgefangen werden kann. Man erhitzt zur Vervollständigung der Reaktion noch ca. 2 bis 3 Stunden bei 200°C. Danach destilliert man den Überschuss Triäthylphosphit ab, lässt auf 100°C abkühlen, versetzt mit 50 ml Toluol, klärt mit Bleicherde und filtriert ab. Zum Filtrat gibt man 30 ml Methylcyclohexan und lässt die Substanz auskristallisieren. Ausbeute: 41 g (65% der Theorie) hellgelbe Kristalle der Verbindung der Formel

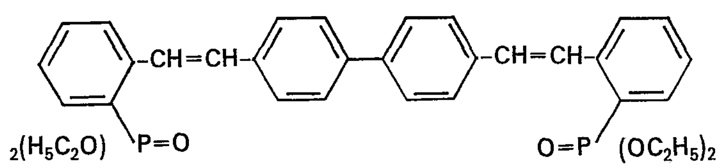

(5)

deren Lösung in Dimethylformamid eine intensive rotstichig blaue Fluoreszenz zeigt.

Beispiel 5

12,6 g (0,02 Mol) der Verbindung (5) werden mit 4,5 g (0,08 Mol) Kaliumhydroxid in 50 ml Methylglykol 10 Stunden am Rückfluss erhitzt. Danach wird das Lösungsmittel abdestilliert und der Rückstand in 100 ml dest. Wasser gelöst, heiss mit A-Kohle geklärt und abfiltriert. Das Filtrat wird dann mit konz. Salzsäure auf pH 2 gestellt. Nach Abfiltrieren und Trocknen erhält man 9,9 g (86,1% der Theorie) hellgelbe Kristalle einer Verbindung der wahrscheinlichen Struktur

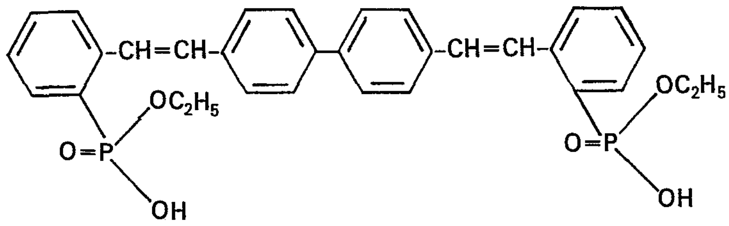

(6)

die aus Dimethylformamid umkristallisiert eine starke rotstichige, blaue Fluoreszenz zeigen.

Durch Umsetzung oberhalb 150 °C im Autoklaven erhält man aus den gleichen Ausgangsverbindungen in analoger Weise dagegen die Verbindung der Formel

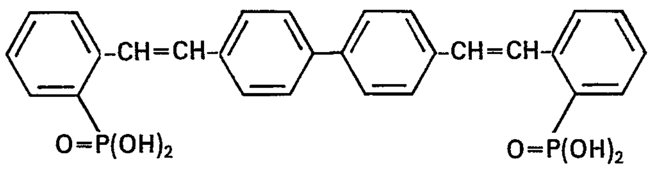

(7)

die aus Eisessig umkristallisiert eine rotstichig blaue Fluoreszenz aufweist.

Beispiel 6

In ähnlicher Weise erhält man aus 2,6-Di(2-bromstyryl)-naphthalin durch Umsetzung mit Triäthylphosphit und Kaliumhydroxid die Verbindung der Struktur

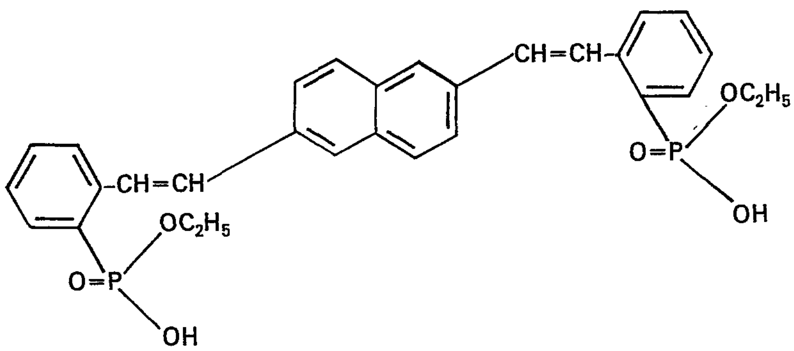

(8)

in Form hellgelber Kristalle, die aus Dimethylformamid umkristallisiert werden und darin eine stark blaue Fluoreszenz zeigen.

Beispiel 7

30,7 g (0,1 Mol) 4-Brommethylbenzolphosphonsäurediäthylester und 23,7 g (0,14 Mol) Triäthylphosphit werden bei Rückflusstemperatur 2 Stunden gerührt. Danach wird das überschüssige Triäthylphosphit im Vakuum abdestilliert und der Rückstand mit 100 ml wasserfreiem Dimethylformamid versetzt. Zu dieser Lösung gibt man 18,7 g (0,08 Mol) 4-Formyl-4′-cyano-stilben und tropft bei 50 °C innerhalb 30 Minuten eine Lösung aus 2,3 g Natrium in 50 ml Äthanol ein. Nachdem die Lösung unter Stickstoff 4 Stunden bei 50 °C gerührt worden ist, wird das Reaktionsgemisch auf 500 ml Wasser ausgetragen und mit Essigsäure auf pH 4–5 gestellt. Es wird mit dreimal je 100 ml Chloroform extrahiert. Die organische Phase wird dann mit je einmal 100 ml gesättigter Natriumcarbonatlösung und 100 ml Wasser gewaschen. Nach Trocknen über wasserfreiem Natriumsulfat und Abfiltrieren wird das Lösungsmittel im Vakuum entfernt. Der Rückstand wird mit 50 ml Tetrachlorkohlenstoff versetzt. Man erhält 18,8 g (53% der Theorie) hellgelbes Kristallpulver der Verbindung der Formel

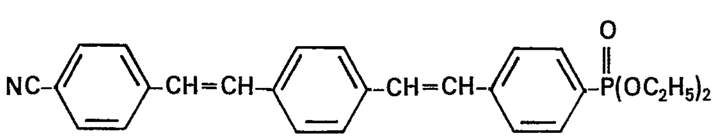

(8)

die durch Umkristallisieren aus Toluol gereinigt wird. Die Substanz fluoresziert in Dimethylformamid gelöst stark blau und liefert auf Polyester im Auszieh-Verfahren sehr gute Weisseffekte mit sehr guten Echtheiten.

Zur Herstellung der Verbindung (8) kann man mit dem gleichen Erfolg auch Terephthalaldehyd verwenden und nacheinander mit den entsprechenden Mengen 2-Diäthoxyphosphonomethylbenzonitril und 4-Diäthoxyphosphonomethylbenzolphosphonsäurediäthylester umsetzen. Als Lösungsmittel kann man anstelle von Dimethylformamid auch Hexamethylphosphorsäuretriamid verwenden. Die Isolierung der unsymmetrischen

Verbindung der Formel (8) aus dem Gemisch kann durch Umkristallisieren oder durch säulenchromatographische Trennung erfolgen.

Beispiel 8

In gleicher Weise wie in Beispiel 7 erhält man aus 13,2 g (0,05 Mol) 4-Diäthoxyphosphonomethylchlorbenzol, 21,2 g (0,05 Mol) (4-Diäthoxyphosphonomethylbenzol)-phenylphosphinsäure-n-butylester und 3,35 g (0,025 Mol) Terephthalaldehyd die Verbindung der Formel

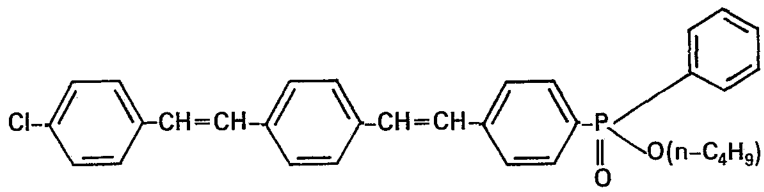

(10)

Aus Xylol erhält man blassgelbe Kristalle, deren Lösung in Dimethylformamid eine intensive, rotstichig blaue Fluoreszenz zeigt.

Beispiel 9

Analog Beispiel 4 erhält man aus den entsprechenden Dibromdistyryl-Verbindungen und Triäthylphosphit die Verbindung der Formel

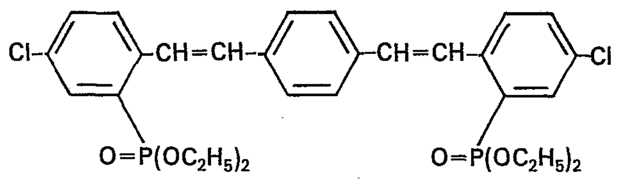

(11)

als gelbe Kristalle, die aus Xylol umkristallisiert werden und in Dimethylformamid rotstichig blau fluoreszieren.

In der nachstehenden Tabelle I werden weitere besonders wertvolle Verbindungen, welche der Formel

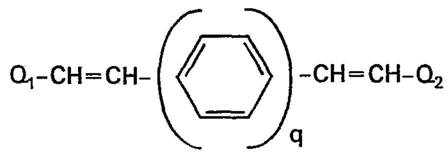

(11)

entsprechen, aufgeführt. Die Isolierung der unsymmetrischen Verbindungen aus den Gemischen mit den symmetrischen Verbindungen kann gegebenenfalls aufgrund der unterschiedlichen Löslichkeiten der Verbindungen durch Umkristallisation oder durch säulenchromatographische Trennung erfolgen.

Tabelle I

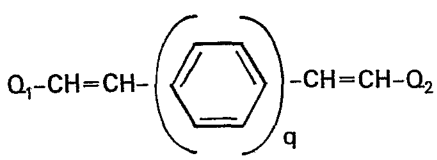

| Nr. | $Q_1$ | $Q_2$ | q | Fluoreszenz in DMF |
|---|---|---|---|---|
| 13 | 4-Diäthoxyphosphonophenyl | 2-Cyanophenyl | 2 | neutrales blau |
| 14 | 4-Di-n-butoxyphosphonophenyl | 4-Biphenylyl | 1 | blau |
| 15 | 4-Diäthoxyphosphonophenyl | 2-Cyano-4-methoxyphenyl | 1 | blau |
| 16 | 4-Diäthoxyphosphonophenyl | 3-Cyanophenyl | 2 | blau |
| 17 | 4-Phosphonophenyl | 4-Phosphonophenyl | 2 | rotstichiges blau |
| 18 | 4-(Hydroxy-phenyl-phosphonyl)-phenyl | 4-(Hydroxy-pehnyl-phosphonyl)-phenyl | 1 | intensives blau |
| 19 | 2-Carboxyphenyl | 2-Phosphonophenyl | 2 | rotstichiges blau |
| 20 | 3-Phosphonophenyl | 2,4-Disulfophenyl | 2 | starkes hellblau |

Tabelle I (Fortsetzung)

| Nr. | $Q_1$ | $Q_2$ | q | Fluoreszenz in DMF |
|---|---|---|---|---|
| 21 | 4-Äthoxycarbonyl-phenyl | 4-Diäthoxyphosphono-phenyl | 2 | blauviolet |
| 22 | 3-Methoxy-4-methyl-phenyl | 4-Diphenylphosphinyl-phenyl | 1 | grünstichiges blau |
| 23 | 4-Acetylphenyl | 4-(Propyl-methoxy-äthoxyphosphonyl)-phenyl | 2 | neutrales blau |
| 24 | 4-(p-Anisyl-äthoxy-phosphonyl)-phenyl | 2-Phosphonophenyl | 2 | blau |
| 25 | 4-Dibenzyloxyphos-phonophenyl | 4-Dibenzyloxyphos-phonophenyl | 1 | rotviolett |
| 26 | 3-Chlor-4-cyano-phenyl | 4-Diphenoxyphosphono-phenyl | 1 | blau |
| 27 | 2-Methyl-4-cyano-phenyl | 3-Di-isopropoxyphos-phonophenyl | 1 | blau |
| 28 | 2-Cyano-5-methoxy-phenyl | 4-p-Anisylmethoxy-phosphonylphenyl | 1 | grünstichig blau |
| 29 | 3-Chlor-4-cyano-phenyl | 3-Chlor-4-diäthoxy-phosphonophenyl | 2 | blau |
| 30 | 3-Di-(2-methoxyäth-oxy)-phosphonophenyl | 3-Di-(2-methoxyäth-oxy)-phosphonophenyl | 2 | blau |
| 31 | 2-Phosphonophenyl | 2-Phosphonophenyl | 2 | rotstichiges blau |

Beispiel 10

Zu einer Lösung von 23,4 g (0,05 Mol) 2,7-Bis(diäthoxyphosphonomethyl)-dibenzofuran und 24,2 g (0,1 Mol) 4-Formylbenzolphosphonsäurediäthylester in 150 ml Dimethylformamid gibt man portionsweise innerhalb von 30 Minuten 13,6 g (0,2 Mol) Natriumäthylat. Dann wird 5 Stunden bei 50°C gerührt, das Reaktionsgemisch auf 500 ml Wasser ausgetragen und mit konz. Salzsäure neutral gestellt. Nach Abfiltrieren und Trocknen erhält man 23,5 g (73% der Theorie) der Verbindung der Formel

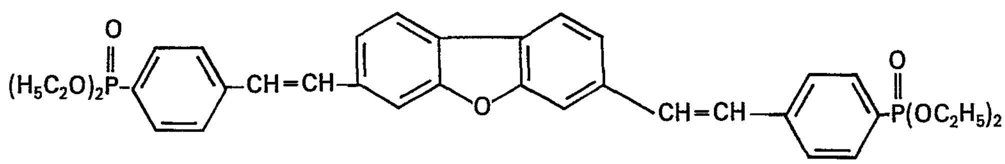

(31)

als hellgelbes Kristallpulver, das aus Xylol umkristallisiert, in Dimethylformamid gelöst eine stark blaue Fluoreszenz zeigt.

Die Herstellung von 4-Formyl-benzolphosphonsäurediäthylester erfolgte in bekannter Weise durch Bromierung von 4-Methyl-benzolphosphonsäurediäthylester und nachfolgender Umsetzung mit Hexamethylentetramin in Essigsäure.

Beispiel 11

Analog Beispiel 4 erhält man aus 2,7-Di-2-bromstyryl)-9,10-dihydrophenanthren und Triäthylphosphit die Verbindung der Formel

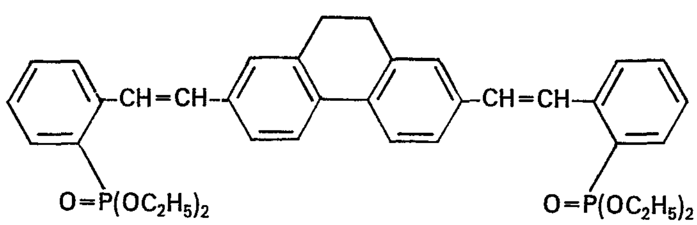

(32)

die aus Xylol unter Zusatz von Bleicherde umkristallisiert, in Dimethylformamid gelöst eine stark blaue Fluoreszenz zeigt.

In ähnlicher Weise werden auch die in der folgenden Tabelle II aufgeführten Distyryl-Verbindungen der allgemeinen Formel

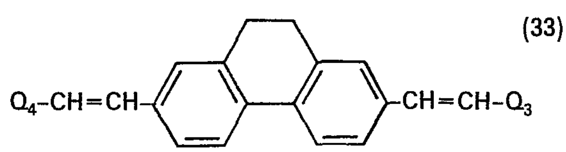

(33)

erhalten.

Tabelle II

| Nr. | $Q_3$ | $Q_4$ | Fluoreszenzfarbe in DMF |
|---|---|---|---|
| 35 | 2-Phosphonophenyl | 2-Phosphonophenyl | rotstichig blau |
| 36 | 3-Dipropoxyphosphonophenyl | 3-Dipropoxyphosphonophenyl | blauviolett |
| 37 | 2-Chlorphenyl | 4-Phenyläthoxyphosphonylphenyl | blau |
| 38 | Phenyl | 4-Phenylmethylphosphonylphenyl | blau |

**Patentansprüche**

1. Distyryl-Verbindungen der Formel

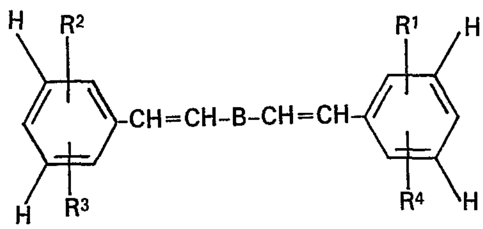

(I)

worin

B 1,4-Phenylen, 4,4'-Biphenylylen, 1,4- und 2,6-Naphthylen, 9,10-Dihydro-2,7-phenanthrenylen oder 2,7-Dibenzofuranylen,

$R^1$ einen Rest der Formel

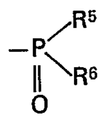

$R^2$ Wasserstoff, Chlor, $C_1$–$C_4$-Alkyl, Sulfo, Carboxy, $C_1$–$C_4$-Alkoxy, $C_1$–$C_4$-Alkoxycarbonyl, Cyano oder einen Rest der Formel

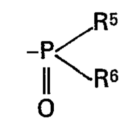

$R^3$ und $R^4$ Wasserstoff, Chlor, $C_1$–$C_4$-Alkyl, gegebenenfalls durch Methyl, Methoxy oder Chlor substituiertes Phenyl, $C_1$–$C_4$-Alkoxy, $C_1$–$C_4$-Alkoxycarbonyl, Cyano, $C_1$–$C_4$-Alkylsulfonyl, $C_1$–$C_4$-Alkylcarbonyl, Hydroxy oder Carboxy

$R^5$ und $R^6$ $C_1$–$C_4$-Alkyl, Benzyl, gegebenenfalls durch Methyl, Methoxy oder Chlor substituiertes Phenyl, eine Gruppe der Formel $-OR^7$, oder einen Rest der Formel

$$-(OCH_2CH_2)_n-OR^7,$$

$R^7$ Wasserstoff, $C_1$–$C_4$-Alkyl, Benzyl oder Phenyl und

n eine ganze Zahl von 1 bis 7 bedeuten,

wobei die Phosphon- bzw. Phosphonsäuregruppe auch als Salz vorliegen kann.

2. Distyryl-Verbindungen gemäss Anspruch 1 der Formel

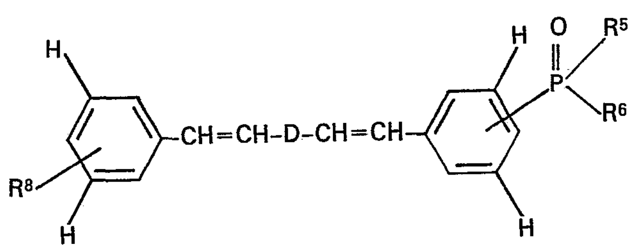

(II)

worin

D 1,4-Phenylen, 4,4'-Biphenylen oder 9,10-Dihydro-2,7-phenanthrenylen,

$R^8$ Wasserstoff, Chlor, $C_1$–$C_4$-Alkyl, Phenyl, $C_1$–$C_4$-Alkoxy, $C_1$–$C_4$-Alkoxycarbonyl, Cyano, $C_1$–$C_4$-Alkylcarbonyl, Hydroxy oder Carboxy oder einen Rest der Formel

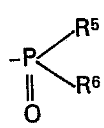

bedeuten,

wobei $R^5$ und $R^6$ die im Anspruch 1 genannte Bedeutung haben.

3. Destyrylverbindungen gemäss Anspruch 2, dadurch gekennzeichnet, dass

D 1,4-Phenylen,

$R^8$ p-Cyano und

$R_5/R_6$ Ethoxy bedeuten, wobei der Phosphorsäureesterrest in p-Stellung steht.

4. Verfahren zur Herstellung von Distyryl-Verbindungen gemäss Anspruch 1, dadurch gekennzeichnet, dass man die Verbindung der Formel

$$Z^1-B-Z^2$$

im molaren Verhältnis 1:1:1 mit je einer Verbindung der Formel

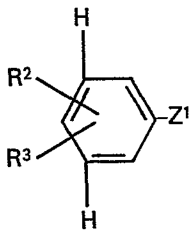

(Va) bzw.

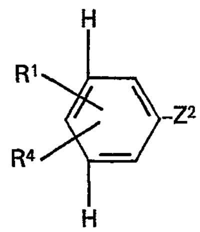

umsetzt, wobei je eines der Symbole $Z_1$ bzw. $Z_2$ eine Formylgruppe und das andere eine Gruppierung der Formel

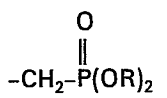

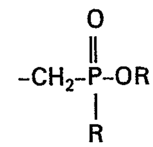

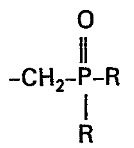

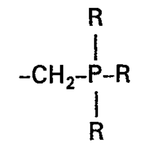

darstellen, worin

R einen gegebenenfalls weitersubstituierten $C_1$-$C_4$-Alkyl, einen $C_5$-$C_6$-Cycloalkyl oder einen gegebenenfalls weitersubstituierten Arylrest bedeuten.

5. Verfahren zum Weisstönen von synthetischen, halbsynthetischen und natürlichen organischen hochmolekularen Materialien, dadurch gekennzeichnet, das man Distyryl-Verbindungen gemäss Anspruch 1 verwendet.

6. Verwendung von Verbindungen gemäss Anspruch 1 zur Erzeugung von Laserstrahlung.

**Revendications**

1. Composés distyryliques de formule

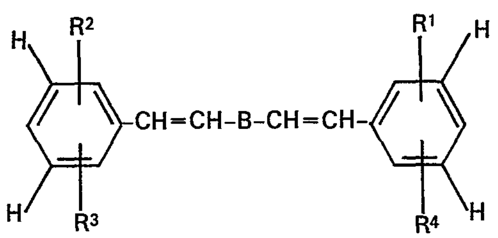

(I)

dans laquelle:

B représente un groupe 1,4-phénylène, 4,4'-biphénylylène, 1,4- et 2,6-naphtylène, 9,10-dihydro-2,7-phénanthrénylène ou 2,7-dibenzofurannylène,

$R^1$ représente un reste de formule

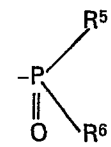

$R^2$ représente l'hydrogène, le chlore ou un groupe alkyle en $C_1$–$C_4$, sulfo, carboxy, alkoxy en $C_1$–$C_4$, (alkoxy en $C_1$–$C_4$)carbonyle, cyano ou un reste de formule

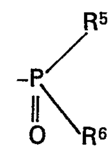

$R^3$ et $R^4$ représentent l'hydrogène, le chlore, un groupe alkyle en $C_1$–$C_4$, un groupe phényle éventuellement substitué par un groupe méthyle ou méthoxy ou le chlore, un groupe alkoxy en $C_1$–$C_4$, (alkoxy en $C_1$–$C_4$)carbonyle, cyano, (alkyl en $C_1$–$C_4$)sulfonyle, (alkyl en $C_1$–$C_4$)carbonyle, hydroxy ou carboxy,

$R^5$ et $R^6$ représentent un groupe alkyle en $C_1$–$C_4$, benzyle, phényle éventuellement substitué par un groupe méthyle ou méthoxy ou le chlore, un groupe de formule $-OR^7$, ou un reste de formule

$-(OCH_2CH_2)_n-OR^7$ ,

$R^7$ représente l'hydrogène ou un groupe alkyle en $C_1$–$C_4$, benzyle ou phényle, et

n représente un nombre entier de 1 à 7,

le groupe acide phosphonique pouvant aussi être salifié.

2. Composés distyryliques selon la revendication 1 de formule

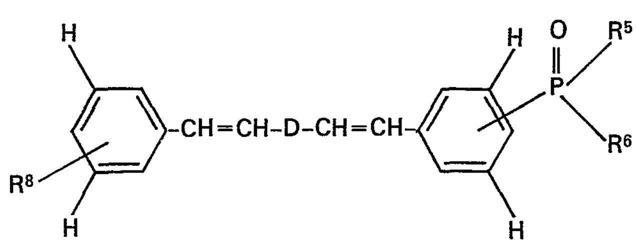

(II)

dans laquelle:

D représente un groupe 1,4-phénylène, 4,4'-biphénylylène ou 9,10-dihydro-2,6-phénanthrénylène,

$R^8$ représente l'hydrogène ou le chlore ou un groupe alkyle en $C_1$–$C_4$, phényle, alkoxy en $C_1$–$C_4$, (alkoxy en $C_1$–$C_4$)carbonyle, cyano, (alkyl en $C_1$–$C_4$)carbonyle, hydroxy ou carboxy ou un reste de formule

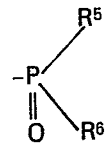

dans laquelle $R^5$ et $R^6$ ont la signification indiquée à la revendication 1.

3. Composés distyryliques selon la revendication 2, caractérisés en ce que D est un groupe 1,4-phénylène, $R^8$ un groupe p-cyano et $R^5$/$R^6$ représentent des groupes éthoxy, le reste ester phosphorique étant en position p.

4. Procédé pour la préparation de composés distyryliques selon la revendication 1, caractérisé en ce que l'on fait réagir le composé de formule

$Z^1$-B-$Z^2$

dans un rapport molaire 1:1:1 avec chacun des composés de formule

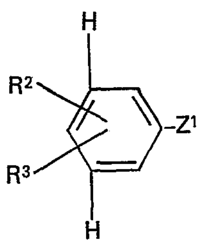

(Va) et

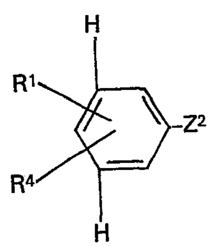

l'un des symboles $Z^1$ et $Z^2$ représentant un groupe formyle et l'autre un groupement de formule

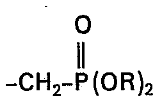

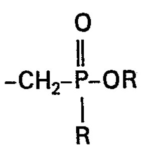

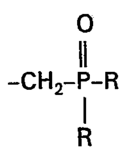

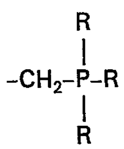

où R représente un groupe alkyle en $C_1$–$C_4$, cycloalkyle en $C_5$–$C_6$ ou un reste aryle qui peut éventuellement être encore substitué, de préférence un reste phényle.

5. Procédé pour l'azurage de produits organiques synthétiques, semi-synthétiques et naturels de poids moléculaire élevé, caractérisé en ce que l'on utilise des composés distyryliques selon la revendication 1.

6. Utilisation de composés selon la revendication 1, pour la production de radiation laser.

**Patent Claims**

1. Distyryl compounds of the formula

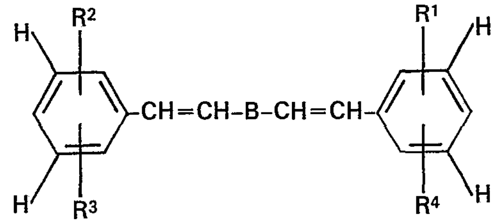

(I)

wherein

B denotes 1,4-phenylene, 4,4′-biphenylene, 1,4- and 2,6-naphthylene, 9,10-dihydro-2,7-phenanthrenylene or 2,7-dibenzofuranylene,

$R^1$ denotes a radical of the formula

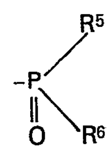

,

$R^2$ denotes hydrogen, chlorine, $C_1$–$C_4$-alkyl, sulpho, carboxyl, $C_1$–$C_4$-alkoxy, $C_1$–$C_4$-alkoxycarbonyl, cyano or a radical of the formula

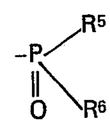

,

$R^3$ and $R^4$ denote hydrogen, chlorine, $C_1$–$C_4$-alkyl, phenyl which is optionally substituted by methyl, methoxy or chlorine, $C_1$–$C_4$-alkoxy, $C_1$–$C_4$-alkoxycarbonyl, cyano, $C_1$–$C_4$-alkylsulphonyl, $C_1$–$C_4$-alkylcarbonyl, hydroxyl or carboxyl,

$R^5$ and $R^6$ denote $C_1$–$C_4$-alkyl, benzyl, phenyl which is optionally substituted by methyl, methoxy or chlorine, a group of the formula $OR^7$ or a radical of the formula $-(OCH_2CH_2)_n-OR^7$,

$R^7$ denotes hydrogen, $C_1$–$C_4$-alkyl, benzyl or phenyl

and

n denotes an integer from 1 to 7,

it being possible for the phosphonic or phosphonic acid group also to be in the form of a salt.

2. Distyryl compounds according to Claim 1 of the formula

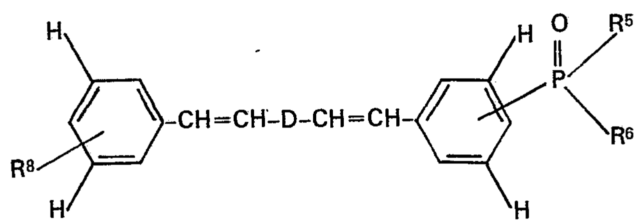

(II)

wherein
D denotes 1,4-phenylene, 4,4′-biphenylene or 9,10-dihydro-2,7-phenanthrenylene and
$R^8$ denotes hydrogen, chlorine, $C_1$–$C_4$-alkyl, phenyl, $C_1$–$C_4$-alkoxy, $C_1$–$C_4$-alkoxycarbonyl, cyano, $C_1$–$C_4$-alkylcarbonyl, hydroxyl or carboxyl or a radical of the formula

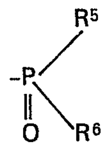

in which
$R^5$ and $R^6$ have the meaning given in Claim 1.

3. Distyryl compounds according to Claim 2, characterised in that
D denotes 1,4-phenylene,
$R^8$ denotes p-cyano and
$R_5$/$R_6$ denote ethoxy, the phosphoric acid ester radical being in the p-position.

4. Process for the preparation of distyryl compounds according to Claim 1, characterised in that the compound of the formula

$Z^1$-B-$Z^2$

is reacted in a molar ratio of 1:1:1 with one compound of the formula

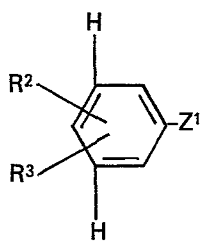

(Va)

and one compound of the formula

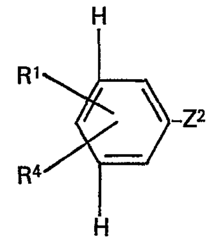

in which formulae
one of each of the symbols $Z_1$ and $Z_2$ represents a formyl group and the other represents a grouping of the formula

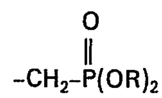

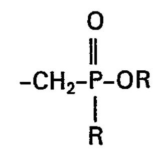

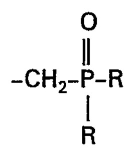

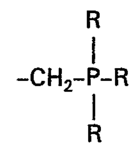

wherein
R denotes a $C_1$–$C_4$-alkyl which is optionally further substituted, a $C_5$–$C_6$-cycloalkyl or an aryl radical which is optionally further substituted.

5. Process for whitening synthetic, semi-synthetic and natural organic high-molecular materials, characterised in that distyryl compounds according to Claim 1 are used.

6. Use of compounds according to Claim 1 for producing laser radiation.